# EUROPEAN PATENT APPLICATION

(11) **EP 4 748 866 A1**
(43) Date of publication of application: **27.05.2026**
(21) Application number: 24214815.3
(22) Date of filing: 22.11.2024
(51) Int. Cl.: C08G 18/08, C08G 18/12, C08G 18/32, C08G 18/42, C08G 18/66, C08G 18/72, C08G 18/73, C08G 18/75, C09D 175/06, C09J 175/06

(54) **AQUEOUS POLYURETHANE DISPERSIONS AND APPLICATIONS THEREOF**

(71) Applicant: Covestro Deutschland AG, 51373 Leverkusen (DE)
(72) Inventor: Deng, Rui, Shanghai, 201206 (CN); Gong, Tony, Shanghai, 201206 (CN); Fan, Zhirong, 40764 Langenfeld (DE); Zheng, Junchao, Shanghai, 201206 (CN); Han, Xiaoxiao, Shanghai, 201206 (CN); Yang, Huiying, Shanghai, 201203 (CN)
(74) Representative: Levpat

(57) **Abstract**

The present invention relates to aqueous polyurethane dispersions and a method for preparing the same, and applications thereof. The aqueous polyurethane dispersion comprises polyurethane and/or polyurethane urea. The aqueous polyurethane dispersion of the present invention has excellent initial adhesive strength and extended tackiness retention time when activated at low temperatures.

## Description

### TECHNICAL FIELD

The present invention relates to an aqueous polyurethane dispersion and a method for preparing the same, and applications thereof.

### BACKGROUND ART

Aqueous polyurethane dispersions can be widely applied in the fields of coating materials, adhesives, sealants, and printing inks. Compared with conventional solvent-based adhesives, they have advantages such as environmental friendliness, non-flammability and non-explosiveness, safe storage, as well as a high solid content. To achieve excellent initial tackiness, bonding strength, and mechanical properties, aqueous polyurethane dispersions are typically synthesized from raw materials comprising crystalline polyols. The resulting aqueous polyurethane dispersions have a regular molecular structure, crystallize quickly, possess high film strength, and exhibit good yellowing resistance and heat resistance. To obtain desirable initial tackiness and adhesive strength, it is necessary to reactivate such polyurethane or polyurethane urea adhesives at a specific temperature. For example, in Appendix A of GB/T 30779-2014 titled "Aqueous Polyurethane Adhesives for Shoes", it is recommended that aqueous polyurethane adhesives for shoes be dried and activated at 70 ± 5°C after application. The relatively high activation temperature implies a need for significant energy consumption during manufacturing. Conversely, reducing the activation temperature may lead to insufficient activation, resulting in bond failure.

CN112812727A describes an aqueous polyurethane adhesive with long-lasting adhesion and a method for preparing the same. Herein, long-lasting adhesion and adhesive strength are achieved by introducing hydroxyl-alkyl polysiloxane at the terminal of a polyurethane molecular structure and optimizing the molecular structure. However, the introduction of polysiloxane inevitably requires longer reaction time, thereby rendering the production process of aqueous polyurethane more complex and leading to decreased batch-to-batch stability of product quality.

CN113234398A provides a cold-bonding polyurethane adhesive that does not require heating for activation and exhibits high bond strength. However, the preparation process thereof and the products contain a significant amount of organic solvents, which is not environmentally friendly.

CN103254867A provides a method for preparing a sulfonic acid-type aqueous polyurethane adhesive, which involves the introduction of sulfonate hydrophilic chain extenders and diamine chain extenders. The minimum activation temperature for this adhesive is in a range of 30 to 40°C. However, as it uses polyoxypropylene glycol and crystalline polyester polyol, the resulting product exhibits relatively poor initial tackiness performance.

In summary, there are no aqueous polyurethane dispersions and adhesive formulations thereof so far in the industrial sector that can simultaneously meet the requirements of low-temperature activation, excellent initial adhesive strength, and extended tackiness retention time, while also being suitable for efficient production.

### SUMMARY OF THE INVENTION

The objective of the present invention is to provide aqueous polyurethane dispersions and adhesive formulations thereof that can simultaneously meet the requirements of low-temperature activation, excellent initial adhesive strength, and extended tackiness retention time, while also being suitable for efficient industrial production.

According to a first aspect of the present invention, there is provided an aqueous polyurethane dispersion comprising polyurethane and/or polyurethane urea, wherein the polyurethane and/or polyurethane urea is obtained by reaction of a system comprising the following components:
a) at least one aromatic polyester polyol component, which is a reaction product of at least one aromatic polyacid and/or aromatic anhydride and at least two polyols, and the amount of component a) is 5 to 75 wt.% of the solid content of the aqueous polyurethane dispersion;
b) at least one crystalline aliphatic polyol component, in an amount of 10 to 83 wt.% of the solid content of the aqueous polyurethane dispersion;
c) at least one polyisocyanate component;
d) at least one hydrophilic compound component comprising NCO reactive functional groups, wherein hydrophilic groups of the hydrophilic compound comprise one or more of ionic groups, potentially ionic groups and nonionic groups;
e) an optional small molecule alcohol component different from components a) and b), having a molecular weight of 32 to 400 g/mol; and
f) an additional isocyanate-reactive compound component, comprising one or more of water, amine chain extenders and amine end-capping agents,
wherein the weight-average molecular weight of the polyurethane and/or polyurethane urea is in a range of 35,000 to 250,000 g/mol.

According to a second aspect of the present invention, there is provided a coating material, an adhesive, a sealant or an ink prepared using the above aqueous polyurethane dispersion.

According to a third aspect of the present invention, there is provided use of the coating material, adhesive, sealant or ink for preparing a coated product, a bonded product, a sealed product or a printed product.

According to a fourth aspect of the present invention, there is provided a bonding method, comprising the steps of:
i. applying the adhesive according to the present invention to at least one surface of a substrate;
ii. heating and drying the surface of the substrate applied with the adhesive at a temperature in a range of 30°C to 59°C; and
iii. bringing another substrate into contact with the surface of the substrate treated in step ii to obtain a bonded product.

According to a fifth aspect of the present invention, there is provided an article comprising a substrate coated, bonded, sealed or printed with said coating material, adhesive, sealant or ink.

The adhesive formulated with the aqueous polyurethane dispersion according to the present invention can exhibit excellent initial adhesive strength even at a low activation temperature (e.g., 55°C) and has a sufficiently extended tackiness retention time, ensuring good initial adhesive strength and initial heat resistance during the tackiness retention time.

### DETAILED DESCRIPTION OF THE INVENTION

Some embodiments of the present invention are now described for the purpose of illustration rather than limitation.

The present invention provides an aqueous polyurethane dispersion comprising polyurethane and/or polyurethane urea, wherein the polyurethane and/or polyurethane urea is obtained by reaction of a system comprising the following components:
a) at least one aromatic polyester polyol component, which is a reaction product of at least one aromatic polyacid and/or aromatic anhydride and at least two polyols, and the amount of component a) is 5 to 75 wt.% of the solid content of the aqueous polyurethane dispersion;
b) at least one crystalline aliphatic polyol component, in an amount of 10 to 83 wt.% of the solid content of the aqueous polyurethane dispersion;
c) at least one polyisocyanate component;
d) at least one hydrophilic compound component comprising NCO reactive functional groups, wherein hydrophilic groups of the hydrophilic compound comprise one or more of ionic groups, potentially ionic groups and nonionic groups;
e) an optional small molecule alcohol component different from components a) and b), having a molecular weight of 32 to 400 g/mol; and
f) an additional isocyanate-reactive compound component, comprising one or more of water, amine chain extenders and amine end-capping agents,
wherein the weight-average molecular weight of the polyurethane and/or polyurethane urea is in a range of 35,000 to 250,000 g/mol.

The present invention further provides a method for preparing the aqueous polyurethane dispersion and applications thereof, in particular applications in the field of coating materials, adhesives or inks, as well as a product obtained by coating, bonding, sealing or printing with the aqueous polyurethane dispersion.

The term "adhesive" used in the present application refers to a chemical substance that can be applied to a surface of an object by a variety of processes to form a coating on the object itself or on the surfaces of one object and another object, and to bond the object itself or the surfaces of one object and another object, and it also serves as a synonym for a binder and/or a sealant and/or a bonding agent.

The term "polyurethane and/or polyurethane urea" used in the present application refers to polyurethane and/or polyurethane polyurea and/or polyurea and/or polythiourethane.

The term "aqueous polyurethane dispersion" used in the present application refers to an aqueous polyurethane dispersion and/or aqueous polyurethane polyurea dispersion and/or aqueous polyurea dispersion and/or aqueous polythiourethane dispersion.

The solid content of the aqueous polyurethane dispersion in the present application refers to nonvolatile substances in the aqueous polyurethane dispersion.

The term "polyol" used in the present application refers to an alcohol compound comprising at least two hydroxyl groups in the molecule.

The term "isocyanate-reactive compound" used in the present application refers to a component comprising a group reactive toward isocyanate groups, that is, a component comprising a group containing Zerevitinoff-active hydrogen. The definition of Zerevitinoff-active hydrogen refers to Rompp's Chemical Dictionary (Rommp Chemie Lexikon), 10th edition, Georg Thieme Verlag Stuttgart, 1996. In general, the group containing Zerevitinoff-active hydrogen is understood in the art to mean a hydroxyl group (OH), an amino group (NHₓ) and a thiol group (SH).

### Aqueous polyurethane dispersion

The amount of the organic solvent in the aqueous polyurethane dispersion is preferably less than 1 wt.%, relative to the total weight of the aqueous polyurethane dispersion.

The aqueous polyurethane dispersion preferably meets at least one of the following characteristics:
a viscosity of 10 to 6,000 mPa·s, measured in accordance with ISO 2555:2018 using a Brookfield viscometer (Brookfield DV-II+ Pro);
a solid content of 15 to 70 wt.%, measured in accordance with DIN-EN ISO 3251:2019 using a Mettler Toledo halogen moisture analyzer (Mettler Toledo Halogen Moisture Analyzer Excellence HS153);
an average particle size of 20 to 750 nm, determined in accordance with ISO 13321:1996 using a ZEN 1600 tester through laser correlation (a laser particle size analyzer) from Malvern Company; and
a pH of 4 to 10, measured at 23°C using a PB-10 pH meter from the German company Sartorius.

The weight-average molecular weight of the polyurethane and/or polyurethane urea is in a range of 35,000 to 250,000 g/mol, measured using gel chromatography. The chromatograph is a liquid phase chromatograph from Agilent, utilizing a polyester copolymer-type GPC chromatographic column with an exclusion limit of up to 1,000,000 g/mol. The concentration of a sample is approximately 0.006 g/mL, and the sample size is 100 µL. Using dimethylacetamide (DMAc) as the mobile phase, the analysis is conducted at a column temperature of 60°C, and a differential refraction detector is employed for detection. The final weight-average molecular weight is based on a polystyrene standard material as the standard, and components with a molecular weight of 200 or higher are selected for calculation.

In a preferred embodiment of the invention the solid content of the aqueous polyurethane dispersion is 30 to 65 wt.%, more preferably 40 to 60 wt.%, relative to the total weight of the aqueous polyurethane dispersion.

In a preferred embodiment of the invention the weight-average molecular weight of the aqueous polyurethane dispersion is in a range of 35,000 to 210,000 g/mol.

The average particle size of the aqueous polyurethane dispersion is preferably 50 to 450 nm, most preferably 100 to 350 nm.

The pH value of the aqueous polyurethane dispersion is preferably in a range of 5.0 to 10.0, more preferably in a range of 6.0 to 9.0.

### Component a): aromatic polyester polyol component

The component a) is preferably prepared by comprising the following components: aromatic di- or polycarboxylic acids and/or anhydrides, selected from terephthalic, isophthalic and phthalic acids, phthalic anhydride, trimellitic anhydride, and succinic anhydride; at least two low-molecular-weight polyols, selected from ethylene glycol, di-, tris-, tetra-ethylene glycol, 1,2-propanediol, di-, tri-, tetra-propanediol, 1,3-propanediol, 1,4-butanediol, 1,3-butanediol, 2,3-butanediol, 1,5-pentanediol, 1,6-hexanediol, 2,2-dimethyl-1,3-propanediol, 1,4-dihydroxycyclohexane, 1,4-dihydroxymethylcyclohexane, 1,8-octanediol/1,10-decanediol and 1,12-dodecanediol; and optional polyols with higher functionality such as trimethylolpropane, glycerol or pentaerythritol, alicyclic and/or aromatic di- and polyhydroxy compounds.

The component a) is further preferably obtained by reaction of a mixture comprising at least one of an aromatic diacid and an aromatic anhydride and at least two diols.

The aromatic diacid is preferably one or more of: terephthalic acid, isophthalic acid and phthalic acid; the aromatic anhydride is preferably phthalic anhydride;

The diols are preferably two or more of: ethylene glycol, diethylene glycol, triethylene glycol, 1,2-propylene glycol, 1,3-propylene glycol, dipropylene glycol, tripropylene glycol, butanediol, neopentyl glycol, 3-methylpentanediol, hexanediol, heptanediol, nondiol and decanediol.

The diols are preferably a mixture of neopentyl glycol and hexanediol. The molar ratio of neopentyl glycol to hexanediol is preferably 9/1 to 1/9, more preferably 6/1 to 1/6, and further most preferably 3/1 to 1/3.

The component a) is most preferably a product of phthalic anhydride and neopentyl glycol and hexanediol.

Preferably, the component a) has a number-average molecular weight of 100 to 20,000 g/mol, preferably 500 to 5,000 g/mol, more preferably 500 to 4,000 g/mol, and/or a functionality of 1.5 to 4.0, preferably 1.8 to 2.5, more preferably 2..

The amount of component a) is 5 to 75 wt.%, preferably 7 to 70 wt.%, more preferably 15 to 60 wt.% of the solid content of the aqueous polyurethane dispersion.

### Component b): crystalline aliphatic polyol

Suitable crystalline aliphatic polyol components are aliphatic and crystalline polyester polyols, polyurethane polyols, polycarbonate polyols, polyether polyols, polyester polyacrylate polyols, polyurethane polyacrylate polyols, polyurethane polyester polyols, polyurethane polyether polyols, polyurethane polycarbonate polyols, and polyester polycarbonate polyols, particularly preferably at least one or two or more of aliphatic and crystalline polyester polyols, polyether polyols, polycarbonate polyols, and polycaprolactone polyols; more preferably at least one or two or more of an aliphatic and crystalline polyester polyols, polycaprolactone polyols, and polycarbonate polyols, and most preferably crystalline aliphatic polyester polyols.

In a preferred embodiment component b) is selected from polyester polyols, polycaprolactone polyols and polycarbonate polyols or a mixture of at least two thereof.

Preferred polyester polyols are known polycondensates of di- and optionally tri- and tetra-alcohols with di- and optionally tri- and tetra-carboxylic or hydroxycarboxylic acids or lactones. Instead of free polycarboxylic acids, polyesters can also be prepared using the corresponding polycarboxylic anhydrides or the corresponding polycarboxylic esters of lower alcohols. Examples of suitable diols include ethylene glycol, butanediol, diethylene glycol, triethylene glycol, polyalkylene glycol such as polyethylene glycol, and 1,2-propanediol, 1,3-propanediol, 1,3-butanediol, 1,4-butanediol, 1,6-hexane diol and isomers, neopentyl glycol or hydroxypivalic acid neopentyl glycol ester, wherein the three compounds mentioned later are preferred. In order to achieve a functionality greater than or equal to 2, polyols having a functionality of 3 may optionally be used in a proportional manner. For example, can be made of trimethylolpropane, glycerol, erythritol, pentaerythritol, trimethylolbenzene, or trihydroxyethyl isocyanurate.

Hydroxycarboxylic acids suitable as reactants in the preparation of hydroxyl-terminated polyester polyols are, for example, hydroxyhexanoic acid, hydroxybutyric acid, hydroxycapric acid, hydroxystearic acid, and the like. Available lactones are especially ε-caprolactone, butyrolactone and homologues.

Preferred polyester polyols are typically constructed from one or more aliphatic and/or cycloaliphatic dicarboxylic acids with one or more aliphatic and/or cycloaliphatic diols, and prepared by a polycondensation process.

Preferred dicarboxylic acids are saturated aliphatic acids, such as hexahydrophthalic acid, cyclohexanedicarboxylic acid, adipic acid, azelaic acid, sebacic acid, glutaric acid, maleic acid, fumaric acid, itaconic acid, malonic acid, octanedioic acid, 2-methylsuccinic acid, succinic acid, 3,3-diethyl glutaric acid, 2,2-dimethylsuccinic acid. Anhydrides of these acids can also be used provided they are present. Therefore, for the purposes of the present invention, the anhydrides are covered by the expression "acids".

Polyester polyols based on butanediol and/or neopentyl glycol and/or hexanediol and/or glycol and/or diethylene glycol and adipic acid are preferred. Polyester polyols based on butanediol and/or neopentyl glycol and/or hexanediol and adipic acid are particularly preferred.

Preferably, the melting enthalpy of the component b) is greater than 10 J/g, more preferably greater than 20 J/g, still more preferably 30 to 130 J/g, most preferably 40 to 100 J/g.

Preferably, the melting temperature of the component b) is greater than 15°C and less than 100°C, more preferably greater than 40°C and less than 70°C.

The melting temperature and the melting enthalpy are obtained from the first heating curve measured over a temperature range from -85°C to 150°C, using DSC-7 of the Perkin-Elmer company in accordance with DIN 65467: 1999. The loading quanity of a sample is about 5 mg, and the heating rate is 20 K/min.

In a preferred embodiment of the aqueous polyurethane dispersion, the component b) has a number-average molecular weight of 100 to 20,000 g/mol, preferably 500 to 5,000 g/mol, more preferably 500 to 4,000 g/mol, and/or a functionality of 1.5 to 4.0, preferably a functionality of 1.8 to 2.5, more preferably a functionality of 2.

Preferably, the component b) is 10 to 83 wt.%, preferably 15 to 81 wt.%, most preferably 20 to 80 wt.% of the solid content of the aqueous polyurethane dispersion.

In a preferred embodiment of the aqueous polyurethane dispersion, the weight ratio of the component a) to the component b) is 6/1 to 1/15, preferably 5/1 to 1/11, more preferably 2/1 to 1/9, and most preferably 1/1 to 1/6.

### Component c): polyisocyanate

The isocyanate functionality of the polyisocyanate component is preferably not less than 2, and most preferably 2 to 4.

In a preferred embodiment of the aqueous polyurethane dispersion, the component c) is selected from diisocyanates represented by the formula Y(NCO)₂, wherein Y represents a divalent aliphatic hydrocarbon group having 4 to 12 carbon atoms, a divalent alicyclic hydrocarbon group having 6 to 15 carbon atoms, a divalent aromatic hydrocarbon group having 6 to 15 carbon atoms, or a divalent araliphatic hydrocarbon group having 7 to 15 carbon atoms,
preferably, Y represents a divalent aliphatic hydrocarbon group having 4 to 12 carbon atoms or a divalent alicyclic hydrocarbon group having 6 to 15 carbon atoms,
more preferably, the polyisocyanate is selected from tetramethylene diisocyanate, pentamethylene diisocyanate, hexamethylene diisocyanate, dodecamethylene diisocyanate, 1,4-cyclohexane diisocyanate, isophorone diisocyanate, 4,4'-dicyclohexylmethane diisocyanate and 4,4'-dicyclohexylpropane diisocyanate, and
preferably the amount of the component c) is 5 to 80 wt.%, more preferably 5 to 70 wt.%, most preferably 5 to 50 wt.% of the solid content of the aqueous polyurethane dispersion.

The polyisocyanate is preferably one or more of the following: aliphatic polyisocyanates, cycloaliphatic polyisocyanates, aromatic polyisocyanates, and their derivatives comprising iminooxadiazinedione, isocyanurate, uretdione, carbamate, allophanate, biuret, urea, dioxazinetrione, oxazolidinone, acyl urea, and/or carbodiimide groups.

The aliphatic polyisocyanate is preferably one or more of the following: hexamethylene diisocyanate, 1,5-pentanediisocyanate, 2,2-dimethylpentyl diisocyanate, 2,2,4-trimethylhexamethylene diisocyanate, butylene diisocyanate, 1,3-butadiene-1,4-diisocyanate, 2,4,4-trimethyl 1,6-hexamethylene diisocyanate, 1,6,11-undecane triisocyanate, 1,3,6-hexamethylene triisocyanate, 1,8-diisocyanato-4-methyl isocyanate octane, bis(isocyanatoethyl) carbonate, bis(isocyanatoethyl) ether, lysine methyl ester diisocyanate, lysine triisocyanate, bis(isocyanatomethyl) thioether, bis(isocyanatoethyl) thioether, bis(propyl isocyanate) thioether, bis(hexyl isocyanato) thioether, bis(isocyanatomethyl) sulfone, bis(isocyanatomethyl) dithioether, bis(isocyanatoethyl) dithioether, bis(isocyanatopropyl) dithioether, bis(isocyanato-methylthio) methane, bis(isocyanatylethylthio) methane, bis(isocyanatomethylthio) ethane, bis(isocyanatylethylthio) ethane, 1,5-diisocyanato-2-isocyanatomethyl-3-thiopentane, 1,2,3-tris(isocyanatomethylthio) propane, 1,2,3-tris(isocyanatoethylthio) propane, 3,5-dithia-1,2,6,7-heptane tetraisocyanate, 2,6-diisocyanatomethyl-3,5-dithia-1,7-heptane diisocyanate, 2,5-diisocyanatomethylthiophene, ethylthioiso-cyanato-2,6-dithia-1,8-octane diisocyanate, thiobis(3-isothiocyanatopropane), thiobis(2-isothiocyanatopropane) and dithiobis(2-isothiocyanatopropane), and most preferably hexamethylene diisocyanate.

The cycloaliphatic polyisocyanate is preferably one or more of the following: 2,5-bis(isocyanatomethyl)-bicyclo[2.2.1] heptane, 2,6-bis(isocyanatomethyl)-bicyclo[2.2.1] heptane, bis(isocyanatomethyl) cyclohexane, isophorone diisocyanate, 4,4-dicyclohexylmethane diisocyanate, 2,5-diisocyanate tetrahydrothiophene, 2,5-diisocyanate methyl tetrahydrothiophene, 3,4-diisocyanate methyl tetrahydrothiophene, 2,5-diisocyanato-1,4-dithiane, 2,5-diisocyanate methyl-1,4-dithiane, 4,5-diisocyanato-1,3-dithiolane, 4,5-bis(isocyanatomethyl)-1,3-dithiolane, 4,5-diisocyanate methyl-2-methyl-1,3-dithiolane, norbornane diisocyanate (NBDI), xylylene diisocyanate (XDI), hydrogenated benzenedimethylene diisocyanate (H₆XDI), 1,4-cyclohexyl diisocyanate (H₆PPDI), m-tetramethylbenzene dimethyl diisocyanate (m-TMXDI) and cyclohexane diisothiocyanate, and most preferably one or more of the following: isophorone diisocyanate and 4,4'-dicyclohexylmethane diisocyanate.

The aromatic polyisocyanate is preferably one or more of the following: 1,2-diisocyanatobenzene, 1,3-diisocyanatobenzene, 1,4-diisocyanatobenzene, 2,4-diisocyanated toluene, ethyl benzene diisocyanate, isopropyl benzene diisocyanate, toluene diisocyanate, diethyl benzene diisocyanate, diisopropyl benzene diisocyanate, trimethyl benzene triisocyanate, benzene triisocyanate, biphenyl diisocyanate, toluidine diisocyanate, 4,4'-methylene bis(isocyanate), 4,4'-methylene bis(2-methylphenyl isocyanate), biphenyl-4,4'-diisocyanate, bis(isocyanatophenyl) ethylene, bis(isocyanatomethyl) benzene, bis(isocyanatoethyl) benzene, bis(isocyanatopropyl) benzene, α,α,α',α'-tetramethylbenzenedimethylene diisocyanate, bis(isocyanatobutyl) benzene, bis(isocyanatomethyl) naphthalene, bis(isocyanate methylphenyl) ether, bis(isocyanatoethyl) phthalate, 2,6-bis(isocyanatomethyl) furan, 2-isocyanatophenyl-4-isocyanatophenyl thioether, bis(4-isocyanatophenyl) thioether, bis(4-isocyanato-methylphenyl) thioether, bis(4-isocyanatophenyl) dithioether, bis(2-methyl-5-isocyanatophenyl) dithioether, bis(3-methyl-5-isocyanatophenyl) dithioether, bis(3-methyl-6-isocyanatophenyl) dithioether, bis(4-methyl-5-isocyanatophenyl) dithioether, bis(4-methoxy-3-isocyanatophenyl) diethoether, 1,2-diisothiocyanate-benzene, 1,3-diisothiocyanatobenzene, 1,4-diisothiocyanatobenzene, 2,4-diisothiocyanate toluene, 2,5-diisothiocyanato-m-xylene, 4,4'-methylene bis(phenyl isothiocyanate), 4,4'-methylene bis(2-methylphenyl isothiocyanate), 4,4'-methylene bis(3-methylphenyl isothiocyanate), 4,4'-diisothiocyanatobenzophenone, 4,4'-diisothiocyanato-3,3'-dimethyl benzophenone, bis(4-isothiocyanatophenyl) ether, 1-isothio-cyanato-4-[(2-isothiocyanato)sulfonyl]benzene, thiobis(4-isothiocyanatobenzene), sulfonyl (4-isothiocyanatobenzene), hydrogenated toluene diisocyanate (HeTDI), diphenylmethane diisocyanate and dithiobis(4-isothiocyanatobenzene), and most preferably one or more of the following: 1,2-diisocyanatobenzene, 1,3-diisocyanatobenzene, 1,4-diisocyanatobenzene, diphenylmethane diisocyanate and 2,4-diisocyanatotoluene.

The additional isocyanate may also have an isocyanate group and an isothiocyanate group, for example, 1-isocyanato-6-isothiocyanatohexane, 1-isocyanato-4-isothiocyanatocyclohexane, 1-isocyanato-4-isothiocyanatobenzene, 4-methyl-3-isocyanato-1-isothiocyanatobenzene, 2-isocyanato-4,6-diisothiocyanato-1,3,5-triazine, 4-isocyanatophenyl-4-isothiocyanatophenyl thioether, and 2-isocyanatoethyl-2-isothiocyanatoethyl dithioether.

The additional isocyanate may also be halogen substituents , for example, chlorine substituents, bromine substituents, alkyl substituents, alkoxy substituents, nitro substituents or silane substituents of the above polyisocyanate such as propyltriethoxysilane isocyanate or propyltrimethoxysilane isocyanate.

The isocyanate is preferably one or more of aliphatic and cycloaliphatic diisocyanates, further preferably one or more of the following: 4,4'-dicyclohexylmethane diisocyanate, hexamethylene diisocyanate and isophorone diisocyanate.

The polyisocyanate is further preferably a mixture of aliphatic diisocyanate and cycloaliphatic diisocyanate, preferably a mixture of hexamethylene diisocyanate and isophorone diisocyanate, or a mixture of hexamethylene diisocyanate and 4,4'-dicyclohexylmethane diisocyanate.

The amount of the component c) is 5 to 80 wt.%, preferably 5 to 70 wt.%, more preferably 5 to 50 wt.% of the solid content of the aqueous polyurethane dispersion.

### Component d): hydrophilic compound

The hydrophilic groups of the hydrophilic compound component d) comprise one or more of ionic groups, potentially ionic groups and nonionic groups, and the hydrophilic compound comprises at least one NCO reactive functional group.

In a preferred embodiment of the aqueous polyurethane dispersion, the NCO reactive functional groups of the hydrophilic compound component d) are hydroxyl and/or amino groups; preferably, the hydrophilic compound component d) is an ionic or potentially ionic compound, preferably an ionic or potentially ionic compound having a carboxyl or carboxylate and/or sulfonate group and/or an amino group, more preferably selected from 6-aminohexanoate, lysinate, N-(2-aminoethyl)-β-alaninate, 2-[(2-aminoethyl)amino]ethanesulfonate and 3-(cyclohexylamino)-1-propanesulfonate, even more preferably selected from 2-[(2-aminoethyl)amino]ethanesulfonate and 3-(cyclohexylamino)-1-propanesulfonate, and most preferably selected from sodium 2-[(2-aminoethyl)amino]ethanesulfonate and sodium 3-(cyclohexylamino)-1-propanesulfonate.

Examples of suitable compounds with a nonionic hydrophilic function include monovalent polyalkylene oxide polyether alcohols having a statistical average of 5 to 70, preferably 7 to 55 ethylene oxide units per molecule. For example, they can be obtained by known methods through alkoxylation of suitable starter molecules. Examples of suitable starter molecules include saturated monohydric alcohols such as methanol, ethanol, n-propanol, isopropanol, n-butanol, isobutanol, sec-butanol, isomeric pentanol, hexanol, octanol and nonanol, n-decanol, n-dodecanol, n-tetradecanol, n-hexadecanol, n-octadecanol, cyclohexanol, isomeric methylcyclohexanol or hydroxymethylcyclohexane, 3-ethyl-3-hydroxymethyloxetane or tetrahydrofurfuryl alcohol, diethylene glycol monoalkyl ethers such as diethylene glycol monobutyl ether, unsaturated alcohols such as allyl alcohol, 1,1-dimethylallyl alcohol or oleyl alcohol, aromatic alcohols such as phenol, isomeric cresol or methoxyphenol, aromatic alcohols such as benzyl alcohol, anise alcohol or cinnamyl alcohol, secondary monoamines such as dimethylamine, diethylamine, dipropylamine, diisopropylamine, dibutylamine, bis-(2-ethylhexyl)-amine, N-methyl- and N-ethylcyclohexylamine or dicyclohexylamine, and heterocyclic secondary amines such as morpholine, pyrrolidine, piperidine or 1H-pyrazole. Preferred starter molecules are saturated monohydric alcohols. Particularly preferably, diethylene glycol monobutyl ether is used as the starter molecule. Alkylene oxides suitable for alkoxylation reaction, in particular ethylene oxide and propylene oxide, can be used in any sequence or in the form of a mixture for alkoxylation reaction.

Examples of suitable ionic or potentially ionic compounds include mono- and dihydroxycarboxylic acid, dihydroxydicarboxylic acid, mono- and diaminocarboxylic acid, mono- and dihydroxysulfonic acid, mono- and diaminosulfonic acid, mono- and dihydroxyphosphonic acid or mono- and diaminophosphonic acid and the salt thereof, such as dihydroxymethyl propionic acid, dihydroxymethyl butanoic acid, hydroxyneopentanoic acid, N-(2-aminoethyl)alanine, 2-(2-amino-ethylamino) ethanesulfonic acid, ethylenediamine propyl- or butylsulfonic acid, 1,2- or -1,3-propanediamine ethanesulfonic acid, malic acid, citric acid, glycolic acid, lactic acid, glycine, alanine, taurine, lysine, 3,5-diaminobenzoic acid, an adduct of IPDI and acrylic acid (EP-A 0916647, Example 1) and the alkali metal salt and/or ammonium salt thereof, an adduct of sodium bisulfite on butene-2-diol-1,4, polyether sulfonate, a propoxylated adduct of 2-butenediol and NaHSO₃, e.g. those described in DE-A 2 446 440 (pages 5-9, Formulae I-III), and structural units that can be converted into cationic groups, such as N-methyl-diethanolamine, as hydrophilic building blocks. In addition, salts of cyclohexylamino propanesulfonic acid (CAPS) from WO-A 01/88006 can be used as anionic hydrophilizing agents. Preferred ionic or potentially ionic compounds are those having a carboxyl or carboxylate and/or sulfonate group and/or amino group.

The amino-containing compounds are preferably selected from 6-aminocaproates, lysinates, mono-sodium N-(2-aminoethyl)-β-alaninate, 2-[(2-aminoethyl)amino]-ethanesulfonate and 3-(cyclohexylamine)-1-propanesulfonate.

The amino-containing sulfonates are preferably selected from sodium 2-[(2-aminoethyl)amino]ethanesulfonate and sodium 3-(cyclohexylamine)-1-propanesulfonate or a mixture thereof.

Preferably, the amount of component d) is 0.1 to 5 wt.%, preferably 0.3 to 3 wt.%, more preferably 0.5 to 1.5 wt.% of the solid content of the aqueous polyurethane dispersion.

### Component e): small molecule alcohol component different from comp. a) and b)

A suitable small molecule alcohol component as component e) is a compound with at least one active hydrogen which is reactive with isocyanate and has a molecular weight of 32 to 400 g/mol.

In a preferred embodiment of the aqueous polyurethane dispersion, component e) is selected from ethanol, propanol, 2-propanol, n-butyl alcohol, sec-butyl alcohol, n-hexanol and isomers thereof, 2-ethylhexanol, ethylene glycol monomethyl ether, diethylene glycol monomethyl ether, ethylene glycol monobutyl ether, diethylene glycol monobutyl ether, propylene glycol monomethyl ether, dipropylene glycol monomethyl ether, tripropylene glycol monomethyl ether, propylene glycol monobutyl ether, dipropylene glycol monobutyl ether, tripropylene glycol monobutyl ether, 1-octanol, 1-dodecanol, 1-hexadecanol, lauryl alcohol and stearyl alcohol, ethylene glycol, diethylene glycol, triethylene glycol, tetraethylene glycol, 1,2-propylene glycol, dipropylene glycol, tripropylene glycol, tetrapropylene glycol, 1,3-propanediol, 1,4-butanediol, 1,3-butanediol, 2,3-butanediol, 1,5-pentanediol, 1,6-hexanediol, 2-dimethyl-1,3-propanediol, 1,4-dihydroxymethylcyclohexane, 1,8-octanediol, 1,10-decanediol, 1,12-dodecanediol, neopentyl glycol, 1,4-cyclohexanediol, 1,4-cyclohexanediethanol, 1,4-, 1,3-, 1,2-dihydroxybenzene or 2,2-bis-(4-hydroxyphenyl)-propane (bisphenol A), tricyclodecane dimethanol, trimethylolpropane, trimethylolethane, glycerol, pentaerythritol, dipentatriol or a mixture of at least two of the above, preferably selected from 1,4-butanediol, 1,6-hexanediol, and neopentyl glycol or a mixture of at least two thereof.

Preferably, the amount of component e) is 0 to 3 wt.%, preferably 0 to 2 wt.%, more preferably 0 to 1 wt.% of the solid content of the aqueous polyurethane dispersion.

### Component f): additional isocyanate-reactive compounds

The additional isocyanate-reactive compounds refer to compounds that can react with isocyanate groups other than components a), b), e) and d). They are preferably selected from water, amine chain extenders and amine end-capping agents, preferably isocyanate-reactive compounds having a molecular weight of 62 to 399 g/mol.

In a preferred embodiment of the aqueous polyurethane dispersion component f) is selected from water, hydrazine, hydrazide, aliphatic or alicyclic monoamines, diamines or triamines or hydroxy functional monoamines or diamines; and preferred amines are ethylenediamine, isophorone diamine, diethylenetriamine, ethanolamine, N-methylethanolamine, diethanolamine, diisopropanolamine, 1,3-diamino-2-propanol, N-(2-hydroxyethyl)-ethylenediamine, N,N-bis(2-hydroxyethyl)-ethylene diamine and 2-propanolamine or a mixture of at least two thereof.

Organic diamines or polyamines can be used as component f), for example, 1,2-ethylenediamine, 1,2- and 1,3-diaminopropane, 1,4-diaminobutane, 1,6-diaminohexane, isophorone diamine, isomeric mixtures of 2,2,4- and 2,4,4-trimethylhexamethylene diamine, 2-methylpentamethylene diamine, diethylenetriamine, 4,4-diaminodicyclohexylmethane, hydrazine hydrate and/or dimethylethylene diamine.

Furthermore, compounds having secondary amino groups in addition to primary amino groups or having OH groups in addition to amino groups (primary or secondary) may also be used. Examples of these compounds include diethanolamine, 3-amino-1-methylaminopropane, 3-amino-1-ethylaminopropane, 3-amino-1-cyclohexyl-aminopropane, 3-amino-1-methylaminobutane, alkanolamines such as N-aminoethyl-ethanolamine, ethanolamine, 3-aminopropanol and neopentanolamine.

In addition, monofunctional isocyanate-reactive amine compounds may also be used. Examples of these compounds include methylamine, ethylamine, propylamine, butylamine, octylamine, laurylamine, stearyl amine, isononyloxy propylamine, dimethylamine, diethylamine, dipropylamine, dibutylamine, N-methylaminopropylamine, diethyl(methyl)aminopropylamine, morpholine, piperidine or suitable substituted derivatives thereof, amidoamines formed from diprimary amines and monocarboxylic acids, monoketimes of diprimary amines, and primary/tertiary amines, such as N,N-dimethylaminopropylamine.

Dihydrazides, such as adipic dihydrazide, oxalyl dihydrazide, carbohydrazide, and succinic dihydrazide, may also be used. Alternatively, long-chain aminofunctional compounds, such as polyetheramine (Jeffamine), may also be used.

The component f) is preferably selected from 1,2-ethylenediamine, bis(4-aminocyclohexyl)methane, N-(2-hydroxyethyl) ethylenediamine, 1,4-diaminobutane, isophorone diamine, monoethanolamine, diethanolamine and diethylenetriamine.

The component f) is most preferably selected from isophorone diamine, N-(2-hydroxyethyl) ethylenediamine, diethanolamine and 1,2-ethylenediamine.

The amount of the component f) used is, in principle, known to a person of ordinary skill in the art and can be easily determined, for example, preferably 0 to 3 wt.%, and most preferably 0.1 to 2.5 wt.%, based on the solid content of the aqueous polyurethane dispersion.

### System

The system may further comprise one or more of the following: an external emulsifier, a solvent, a reactive diluent, and a stabilizer, added in an amount commonly used by a person of ordinary skill in the art.

### Method for preparing an aqueous polyurethane dispersion comprising polyurethane and/or polyurethane urea

The preparation process of the aqueous polyurethane dispersion of the present invention is simple, and suitable for efficient industrial production. All processes known in the art can be used to prepare the aqueous polyurethane dispersions of the present invention, for example, an emulsifier/shear force method, an acetone method, a prepolymer mixing method, a melt emulsification method, a ketimine method, a solid spontaneous dispersion method or derived methods thereof, preferably a melt emulsification method or an acetone method, and most preferably an acetone method. These methods are summarized in Methoden der Organischen Chemie (Houben-Weyl, Erweiterungs- und Folgebände zur 4. Auflage, Volume E20, H. Bartl and J. Falbe, Stuttgart, New York, Thieme 1987, p.1671-1682).

The sequence of mixing various components of the system for preparing the aqueous polyurethane dispersion may be in a conventional manner.

The polyisocyanate, and the compounds comprising isocyanate-reactive groups, including polyester polyols, may be added all at once or in multiple times, and the components added may be the same as or different from those previously added.

Organic solvents present in the aqueous polyurethane dispersion can be removed by distillation. The organic solvent can be removed during the polyurethane formation or after the polyurethane is formed.

For example, the aqueous polyurethane dispersion of the present invention can be prepared by a method comprising the steps of:
(A) reacting components a), b), c) and e) at 60 to 120°C to form an isocyanato-terminated prepolymer, and using a solvent to dissolve;
(B) reacting the prepolymer with components d) and f) at 20 to 60°C;
(C) adding distilled water for dispersion and emulsification; and
(D) removing the solvent by vacuumization to obtain an aqueous dispersion of polyurethane or polyurethane urea,
wherein component d) may also be added in step (A).

The organic solvent is preferably a solvent that is miscible with water but inert to isocyanate groups, and is further preferably one or more of the following: acetone, methyl ethyl ketone, propylene glycol dimethyl ether, other ethers not comprising hydroxyl functional groups, and esters not comprising hydroxyl functional groups; most preferably one or more of the following: acetone and butanone.

The organic solvent preferably does not include pyrrolidone compounds.

The organic solvent can be removed by distillation.

The amount of the residual organic solvent in the aqueous polyurethane dispersion is preferably less than 1.0 wt.%, relative to the total weight of the aqueous polyurethane dispersion.

In order to accelerate the reaction rate of step (A), a catalyst commonly used in the preparation of prepolymers can be used, e.g. triethylamine, 1,4-diazabicyclo-[2,2,2]-octane, tin dioctoate or dibutyltin dilaurate, or other metal organic catalysts, such as organic or inorganic salts of titanium, bismuth, zirconium, zinc, and lead.

The catalyst may be placed in a reactor simultaneously with various components of step (A), or added afterwards.

The extent of conversion of the components in step (A) can be determined by measuring the NCO content in the components. As such, extracted samples can be subjected simultaneously to spectroscopic measurements, such as infrared or near-infrared spectroscopy, and to refractive index determination or chemical analysis, such as titration.

The prepolymer may be in a solid state or a liquid state at room temperature.

### Coating material, adhesive or ink

A further aspect of the invention is related to a coating material, an adhesive, a sealant or an ink prepared using the inventive aqueous polyurethane dispersion. The coating material, adhesive or ink preferably further comprises an additive. The additive is preferably one or more of the following: a co-adhesive, a lubricant, an emulsifier, a light stabilizer, an antioxidant, a filler, an anti-settling agent, an antifoaming agent, a wetting agent, a flow regulator, an antistatic agent, a film-forming additive, a reactive diluent, a plasticizer, a catalyst, a thickener, a pigment, a dye, a binder and a matting agent.

The selection of the additive and the amount used are, in principle, known to a person of ordinary skill in the art and can be easily determined.

The aqueous polyurethane dispersion of the present invention may also be mixed and used together with other aqueous or solvent-containing oligomers or polymers, such as aqueous or solvent-containing polyesters, polyurethanes, polyurethane-polyacrylates, polyacrylates, polyethers, polyester-polyacrylates, alkyd resins, addition polymers, polyamides/imides or polyepoxides. The compatibility of such mixtures must be tested in each case by means of simple preliminary tests.

The aqueous polyurethane dispersion of the present invention may also be mixed and used together with other compounds comprising functional groups such as carboxyl groups, hydroxyl groups and/or blocked isocyanate groups.

The coating material, adhesive or ink of the present invention is preferably obtained by processing according to methods known to a person of ordinary skill in the art.

### Coating method, bonded product or printed product

The substrate is preferably one or more of the following: wood, metal, glass, fiber, textile, artificial leather, genuine leather, paper, plastic, rubber, foam, ceramic and various polymer coating materials, and most preferably one or more of the following: textile, plastic, ceramic, metal, genuine leather, artificial leather and various polymer coatings.

The coating may involve applying the coating material, adhesive or ink to the entire surface of the substrate or only to one or more parts of the surface of the substrate.

The coating may be brushing, dipping, spraying, roller coating, blade coating, flow coating, pouring or printing.

### Bonding method

A further aspect of the invention is related to a bonding method comprising at least the steps of:
i. applying the adhesive according to the present invention to at least one surface of a substrate;
ii. heating and drying the surface of the substrate applied with the adhesive at a temperature in a range of 30°C to 59°C; and
iii. bringing another substrate into contact with the surface of the substrate treated in step ii to obtain a bonded product.

The substrate is preferably one or more of the following: rubber, plastic, paper, cardboard, wood, textile, metal, alloy, fabric, fiber, artificial leather, leather, inorganic material, human or animal hair and human or animal skin, and most preferably one or more of the following: rubber and plastic.

The application may involve applying the adhesive to the entire surface of the substrate or only to one or more parts of the surface of the substrate.

The application may be brushing, dipping, spraying, roller coating, blade coating, flow coating, pouring, printing or transfer printing, preferably brushing, dipping or spraying.

The heating and drying of the surface of the substrate applied with the adhesive may refer to only heating and drying the surface of the substrate, or may refer to heating and drying a part of the substrate or the entire substrate including the surface of the substrate applied with the adhesive.

The heating and drying can remove volatile components. The volatile components may be water.

The heating and drying is preferably one or more of the following: infrared heat radiation, near infrared heat radiation, microwaving, and using a convection oven or spray dryer under elevated temperature conditions.

The heating temperature is preferably 40°C to 59°C, more preferably 50°C to 59°C.

The surface of the substrate treated in step ii. is preferably brought into contact with the substrate itself or another substrate within one hour, more preferably within 30 minutes, even more preferably within 10 minutes, and most preferably within 5 minutes to obtain the bonded product.

The another substrate may be any substrate that needs to be bonded.

The another substrate may be the same as the substrate, or may be different.

The another substrate is preferably subjected to coating and heating treatments just like the substrate.

After the surface of the substrate treated in step ii. is brought into contact with the another substrate, a heating treatment may further be performed.

After the surface of the substrate treated in step ii. is brought into contact with the another substrate, a cooling treatment may further be performed to lower the temperature of the bonded product to room temperature.

The method of introducing heat is preferably one or more of the following: transferring heat, under elevated temperature conditions, by using a convection oven or spray dryer, infrared heat radiation, near infrared heat radiation, microwaving, and using an object in contact with the substrate coated with the adhesive of the present invention.

Before the surface of the substrate treated in step ii. comes into contact with another substrate, preferably no heat needs to be applied to the surface of the substrate.

A further aspect of the present invention is related to an article comprising a substrate coated, bonded, sealed or printed with the inventive aqueous polyurethane dispersion, preferably in the form of a coating material, adhesive, sealant or ink as described before.

Unless defined otherwise, all technical and scientific terms used herein have the same meaning as commonly understood by a person of ordinary skill in the art. When the definition of a term in this specification conflicts with the meanings commonly understood by a person of ordinary skill in the art, the definition described herein shall apply.

Unless indicated otherwise, all numbers expressing amounts of ingredients, reaction conditions and the like used in the specification and claims are to be understood as being modified by the term "about". Accordingly, unless indicated to the contrary, the numerical parameters set forth herein are approximations that can vary depending upon the desired properties to be obtained.

The wording "and/or" used herein refers to one or all of the elements mentioned.

The wordings "include" and "comprise" used herein cover the circumstances of the presence of the mentioned elements alone and the presence of other elements which are not mentioned in addition to the mentioned elements.

Unless otherwise indicated, the wordings "a", "an", and "the" used herein are intended to include "at least one" or "one or more". For example, the wording "a component" refers to one or more components, therefore more than one component may be considered and may be adopted or used in the implementation of the described embodiments.

All percentages in the present application are weight percentage, unless otherwise stated.

The analysis and measurement in the present application are performed at 23±2°C, unless otherwise stated.

The number-average molecular weight of the polymer polyol is measured at 40°C using gel permeation chromatography, with tetrahydrofuran as the mobile phase and using polystyrene as the standard reference material. The procedure here is in accordance with DIN 55672-1: "Gel permeation chromatography, Part 1 - Tetrahydrofuran as eluent" (SECurity GPC System from PSS Polymer Service, flow rate 1.0 ml/min; columns: 2×PSS SDV linear M, 8×300 mm, 5 µm; RID detector).

### Examples

The conception of the present invention, the specific structure and the resulting technical effects will be further illustrated hereinafter in conjunction with the Examples, so that a person of ordinary skill in the art can fully undertsand the objectives, features and effects of the present invention. It is not difficult for a person of ordinary skill in the art to understand that the Examples herein are for the purpose of illustration only, and the scope of the present invention is not limited thereto.

### Main raw materials and reagents

Polyester I: Poly(adipate 1,4-butanediol)diol, having an OH value of 50 mg KOH/g, a number-average molecular weight of 2,250 g/mol, a melting temperature of about 50°C, and a melting enthalpy of 60 J/g (Covestro Deutschland AG).

Polyester II: Aromatic polyester diol composed of 1,6-hexanediol, neopentyl glycol and phthalic anhydride, HDPOL-320NH, having an OH value of 56 mg KOH/g, and a number-average molecular weight of 2,000 g/mol, with a molar ratio of 1,6-hexanediol to neopentyl glycol about 1/1, commercially available from Shanghai Huide Science and Technology Co., Ltd.

Polyester III: Aliphatic polyester diol composed of 1,6-hexanediol, neopentyl glycol and adipic acid, having an OH value of 66 mg KOH/g, a number-average molecular weight of 1,700 g/mol, a melting temperature of about 24°C, and a melting enthalpy of 30 J/g, commercially available from Covestro Deutschland AG.

Polyester IV: Aromatic polyester diol composed of 1,6-hexanediol and phthalic anhydride, having an OH value of 56 mg KOH/g and a number-average molecular weight of 2,000 g/mol, commercially available from Covestro Deutschland AG.

Isocyanate I: Hexamethylene diisocyanate, commercially available from Covestro Deutschland AG.

Isocyanate II: Isophorone diisocyanate, commercially available from Covestro Deutschland AG.

VESTAMINO A 95 (AAS): an aqueous solution of sodium N-(2-aminoethyl)aminoethanesulfonate (51 wt.%), commercially available from Evonik Chemicals Company.

Emulsifier: Lucramul 1820, fatty alcohol poly(ethylene glycol/propylene glycol) ether, commercially available from LEVACO Chemicals GmbH.

Bactericide: Preventol D7, commercially available from Lanxess Company.

Thickener: Borchigel Gel L75N, a transparent liquid at a concentration of 25%, commercially available from Borchers Company.

The chemical reagents used in the following examples are analytically pure, and all percentages in the present invention are weight percentages, unless otherwise specified.

### Testing methods

### Isocyanate group (NCO) content

Determined by volume in accordance with DIN-EN ISO 11909: 2007.

### Viscosity of the aqueous polyurethane dispersion

The viscosity was measured using a Brookfield DV-II+ Pro viscometer in accordance with ISO 3219: 1994. 150 g of the aqueous polyurethane dispersion was weighed in a glass bottle, and the viscosity was measured by rotating a S62 rotor at room temperature (20 to 25°C) with a rotation speed of 30 rpm.

### Solid content of the aqueous polyurethane dispersion

The testing was performed using a Mettler Toledo halogen moisture analyzer (Mettler Toledo Halogen Moisture Analyzer Excellence HS 153). A piece of fiberglass filter paper was placed on a standard aluminum weighing pan, and 1 g of the aqueous polyurethane dispersion was dropped onto the fiberglass filter paper, followed by a standard drying procedure at the drying temperature of 120°C, with the stopping standard set at level 5 (1 mg/140 seconds). In other words, the sample remained under heat at 120°C while being continuously weighed. If the sample loses less than 1 mg within 140 seconds, the testing is stopped, and the remaining weight percentage is recorded as the solid content.

### Method for testing initial adhesion force at different lamination time

A PVC leather (with an overall size of 2.5 cm*12.5 cm; the glued and laminated area is 2.5 cm*10 cm) and an ABS sheet (with an overall size of 2.5 cm*12.5 cm; the glued and laminated area is 2.5 cm*10 cm) were used as test substrates. The ABS surface was cleaned with a fiber containing ethanol, and the cleaned ABS surface was exposed in a fume hood until the cleaned surface was dry.

The surfaces of the PVC and ABS were coated with an adhesive using a 100 µm wire-wound rod, and then dried at 50°C for 10 min to remove moisture, and left at room temperature for 1 hour. A sample was placed in an oven at 55°C for 10 min to activate the adhesive film. The activated sample was taken out of the oven, placed at room temperature, and laminated by rolling back and forth once with a 4.5 kg roller after 0, 3, and 8 min. The peeling strength was tested (T0, T3, and T8) within 1 min. The bonding strength of the sample was tested using a tensile testing machine of BZ2.5/TN1S model from ZWICK Company. The unbonded parts of the ABS and the PVC leather were clamped in the upper and lower clamps of the tensile testing machine respectively, and stretched in a 180° peeling manner at a stretching rate of 300 mm/min. The tensile force used at this time was recorded as the bonding strength. The greater the bond strength tested, the greater the adhesion force between the substrates and the stronger the bonding. In the present application, the adhesion force of T0, T3, and T8 is qualified if it is greater than or equal to 0.4 N/mm, 0.3 N/mm, and 0.2 N/mm.

### Method for testing heat resistance

A PVC leather (with an overall size of 2.5 cm*12.5 cm; the glued and laminated area is 2.5 cm*10 cm) and an ABS sheet (with an overall size of 2.5 cm*12.5 cm; the glued and laminated area is 2.5 cm*10 cm) were used as test substrates. The ABS surface was cleaned with a fiber containing ethanol, and the cleaned ABS surface was exposed in a fume hood until the cleaned surface was dry.

The surfaces of the PVC and ABS were coated with an adhesive using a 100 µm wire-wound rod, and then dried at 50°C for 10 min to remove moisture, and left at room temperature for 1 h. Before testing, a sample was placed in an oven at 55°C for 10 min to activate the adhesive film. The activated sample was taken out of the oven, placed at room temperature, and immediately laminated by rolling back and forth once with a 4.5 kg roller within 20 s. After lamination was completed, in an oven at 80°C, a 100 g weight was loaded immediately, with the weight positioned at an angle of 90 degrees relative to the sample. The time for the sample to be completely peeled off was recorded. The longer the time, the better the heat resistance. In the present application, when the time required for peeling 10 mm is greater than or equal to 2 min, it is considered as qualified.

Other testing methods have been described in other parts of the specification or belong to common methods in the art.

### Preparation of the aqueous polyurethane dispersion

### Example 1 (E1)

54.64 g of polyester I and 30.91 g of polyester II were dehydrated at 110°C and 100 mbar for 1 h, then 0.40 g of 1,4-butanediol was added, followed by cooling while stirring. 6.68 g of isocyanate I and 4.42 g of isocyanate II were added at 60°C, and stirred at 80 to 90°C until an isocyanate content of 1.3% was reached. The mixture was subsequently dissolved in 150 g of acetone and cooled to 40°C to obtain a prepolymer solution. 10 g of an aqueous solution containing 2.66 g of AAS and 0.69 g of diethanolamine was added to the acetone solution with the prepolymer dissolved therein while stirring vigorously for 30 min, and then the mixture was dispersed by adding 83 g of water. Following the separation of acetone by distillation, 7 g of an aqueous solution containing 0.74 g of an external emulsifier and 0.20 g of a bactericide was added to obtain an aqueous polyurethane dispersion 1 having a solid content of 50.1%, a viscosity of 277 mPa·s, a pH value of 6.3, and a weight-average molecular weight of 55,900 g/mol.

The resulting aqueous polyurethane dispersion and Borchigel L75N at a concentration of 25 wt.% were stirred and mixed to obtain an adhesive. The amount of Borchigel L75N was adjusted (in a range of 0.5 to 2.0 wt.% relative to the total amount of the adhesive) so that the viscosity of the adhesive was about 5,000 mPa·s.

### Example 2 (E2)

67.36 g of polyester I and 19.96 g of polyester II were dehydrated at 110°C and 100 mbar for 1 h, followed by cooling while stirring. 6.04 g of isocyanate I and 3.99 g of isocyanate II were added at 60°C, and stirred at 80 to 90°C until an isocyanate content of 1.2% was reached. The mixture was subsequently dissolved in 150 g of acetone and cooled to 40°C to obtain a prepolymer solution. 10 g of an aqueous solution containing 2.12 g of AAS and 0.53 g of diethanolamine was added to the acetone solution with the prepolymer dissolved therein while stirring vigorously for 30 min, and then the mixture was dispersed by adding 83 g of water. Following the separation of acetone by distillation, 7 g of an aqueous solution containing 0.86 g of an external emulsifier and 0.20 g of a bactericide was added to obtain an aqueous polyurethane dispersion 2 having a solid content of 50.6%, a pH value of 6.6, a viscosity of 56 mPa·s, and a weight-average molecular weight of 72,100 g/mol.

The resulting aqueous polyurethane dispersion and Borchigel L75N at a concentration of 25 wt.% were stirred and mixed to obtain an adhesive. The amount of Borchigel L75N was adjusted (in a range of 0.5 to 2.0 wt.% relative to the total amount of the adhesive) so that the viscosity of the adhesive was about 5,000 mPa·s.

### Example 3 (E3)

50.46 g of polyester I and 36.70 g of polyester II were dehydrated at 110°C and 100 mbar for 1 h, followed by cooling while stirring. 6.17 g of isocyanate I and 4.08 g of isocyanate II were added at 60°C, and stirred at 80 to 90°C until an isocyanate content of 1.2% was reached. The mixture was subsequently dissolved in 150 g of acetone and cooled to 40°C to obtain a prepolymer solution. 10 g of an aqueous solution containing 2.26 g of AAS and 0.40 g of diethanolamine was added to the acetone solution with the prepolymer dissolved therein while stirring vigorously for 30 min, and then the mixture was dispersed by adding 83 g of water. Following the separation of acetone by distillation, 7 g of an aqueous solution containing 0.86 g of an external emulsifier and 0.20 g of a bactericide was added to obtain an aqueous polyurethane dispersion 3 having a solid content of 50.3%, a viscosity of 39 mPa·s, a pH value of 6.6, and a weight-average molecular weight of 61,000 g/mol.

The resulting aqueous polyurethane dispersion and Borchigel L75N at a concentration of 25 wt.% were stirred and mixed to obtain an adhesive. The amount of Borchigel L75N was adjusted (in a range of 0.5 to 2.0 wt.% relative to the total amount of the adhesive) so that the viscosity of the adhesive was about 5,000 mPa·s.

### Example 4 (E4)

79.43 g of polyester I and 7.85 g of polyester II were dehydrated at 110°C and 100 mbar for 1 h, followed by cooling while stirring. 5.93 g of isocyanate I and 3.92 g of isocyanate II were added at 60°C, and stirred at 80 to 90°C until an isocyanate content of 1.15% was reached. The mixture was subsequently dissolved in 150 g of acetone and cooled to 40°C to obtain a prepolymer solution. 10 g of an aqueous solution containing 2.16 g of AAS and 0.72 g of diethanolamine was added to the acetone solution with the prepolymer dissolved therein while stirring vigorously for 30 min, and then the mixture was dispersed by adding 83 g of water. Following the separation of acetone by distillation, 7 g of an aqueous solution containing 0.86 g of an external emulsifier and 0.2 g of a bactericide was added to obtain an aqueous polyurethane dispersion 4 having a solid content of 50.7%, a viscosity of 1,880 mPa·s, a pH value of 6.7, and a weight-average molecular weight of 69,300 g/mol.

The resulting aqueous polyurethane dispersion and Borchigel L75N at a concentration of 25 wt.% were stirred and mixed to obtain an adhesive. The amount of Borchigel L75N was adjusted (in a range of 0.5 to 2.0 wt.% relative to the total amount of the adhesive) so that the viscosity of the adhesive was about 5,000 mPa·s.

### Example 5 (E5)

18.96 g of polyester I and 67.41 g of polyester II were dehydrated at 110°C and 100 mbar for 1 h, followed by cooling while stirring. 6.37 g of isocyanate I and 4.21 g of isocyanate II were added at 60°C, and stirred at 80 to 90°C until an isocyanate content of 1.25% was reached. The mixture was subsequently dissolved in 150 g of acetone and cooled to 40°C to obtain a prepolymer solution. 10 g of an aqueous solution containing 2.8 g of AAS and 0.6 g of diethanolamine was added to the acetone solution with the prepolymer dissolved therein while stirring vigorously for 30 min, and then the mixture was dispersed by adding 83 g of water. Following the separation of acetone by distillation, 7 g of an aqueous solution containing 0.86 g of an external emulsifier and 0.2 g of a bactericide was added to obtain an aqueous polyurethane dispersion 5 having a solid content of 50.9%, a viscosity of 480 mPa·s, a pH value of 6.5, and a weight-average molecular weight of 40,600 g/mol.

The resulting aqueous polyurethane dispersion and Borchigel L75N at a concentration of 25 wt.% were stirred and mixed to obtain an adhesive. The amount of Borchigel L75N was adjusted (in a range of 0.5 to 2.0 wt.% relative to the total amount of the adhesive) so that the viscosity of the adhesive was about 5,000 mPa·s.

### Example 6 (E6)

54.74 g of polyester I and 30.96 g of polyester II were dehydrated at 110°C and 100 mbar for 1 h, then 0.40 g of 1,4-butanediol was added, followed by cooling while stirring. 6.69 g of isocyanate I and 4.42 g of isocyanate II were added at 60°C, and stirred at 80 to 90°C until an isocyanate content of 1.3% was reached. The mixture was subsequently dissolved in 150 g of acetone and cooled to 40°C to obtain a prepolymer solution. 10 g of an aqueous solution containing 2.44 g of AAS and 0.63 g of diethanolamine was added to the acetone solution with the prepolymer dissolved therein while stirring vigorously for 30 min, and then the mixture was dispersed by adding 83 g of water. Following the separation of acetone by distillation, 7 g of an aqueous solution containing 0.74 g of an external emulsifier and 0.20 g of a bactericide was added to obtain an aqueous polyurethane dispersion 6 having a solid content of 49.7%, a pH value of 6.6, a viscosity of 218 mPa·s, and a weight-average molecular weight of 40,700 g/mol.

The resulting aqueous polyurethane dispersion and Borchigel L75N at a concentration of 25 wt.% were stirred and mixed to obtain an adhesive. The amount of Borchigel L75N was adjusted (in a range of 0.5 to 2.0 wt.% relative to the total amount of the adhesive) so that the viscosity of the adhesive was about 5,000 mPa·s.

### Example 7 (E7)

79.70 g of polyester I and 7.87 g of polyester II were dehydrated at 110°C and 100 mbar for 1 h, followed by cooling while stirring. 5.95 g of isocyanate I and 3.94 g of isocyanate II were added at 60°C, and stirred at 80 to 90°C until an isocyanate content of 1.15% was reached. The mixture was subsequently dissolved in 150 g of acetone and cooled to 40°C to obtain a prepolymer solution. 10 g of an aqueous solution containing 2.18 g of AAS and 0.39 g of diethanolamine was added to the acetone solution with the prepolymer dissolved therein while stirring vigorously for 30 min, and then the mixture was dispersed by adding 83 g of water. Following the separation of acetone by distillation, 7 g of an aqueous solution containing 0.86 g of an external emulsifier and 0.20 g of a bactericide was added to obtain an aqueous polyurethane dispersion 7 having a solid content of 50.6%, a viscosity of 400 mPa·s, a pH value of 6.6, and a weight-average molecular weight of 104,300 g/mol.

The resulting aqueous polyurethane dispersion and Borchigel L75N at a concentration of 25 wt.% were stirred and mixed to obtain an adhesive. The amount of Borchigel L75N was adjusted (in a range of 0.5 to 2.0 wt.% relative to the total amount of the adhesive) so that the viscosity of the adhesive was about 5,000 mPa·s.

### Example 8 (E8)

79.72 g of polyester I and 7.91 g of polyester II were dehydrated at 110°C and 100 mbar for 1 h, followed by cooling while stirring. 6.05 g of isocyanate I and 3.97 g of isocyanate II were added at 60°C, and stirred at 80 to 90°C until an isocyanate content of 1.2% was reached. The mixture was subsequently dissolved in 150 g of acetone and cooled to 40°C to obtain a prepolymer solution. 10 g of an aqueous solution containing 2.30 g of AAS and 0.2 g of diethanolamine was added to the acetone solution with the prepolymer dissolved therein while stirring vigorously for 30 min, and then the mixture was dispersed by adding 83 g of water. Following the separation of acetone by distillation, 7 g of an aqueous solution containing 0.8 g of an external emulsifier and 0.2 g of a bactericide was added to obtain an aqueous polyurethane dispersion 8 having a solid content of 50.2%, a viscosity of 175 mPa·s, a pH value of 6.4, and a weight-average molecular weight of 205,500 g/mol.

The resulting aqueous polyurethane dispersion and Borchigel L75N at a concentration of 25 wt.% were stirred and mixed to obtain an adhesive. The amount of Borchigel L75N was adjusted (in a range of 0.5 to 2.0 wt.% relative to the total amount of the adhesive) so that the viscosity of the adhesive was about 5,000 mPa·s.

### Comparative Example 1 (CE1)

53.03 g of polyester I and 32.05 g of polyester III were dehydrated at 110°C and 100 mbar for 1 h, then 0.42 g of 1,4-butanediol was added, followed by cooling while stirring. 7.13 g of isocyanate I and 4.71 g of isocyanate II were added at 60°C, and stirred at 80 to 90°C until an isocyanate content of 1.4% was reached. The mixture was subsequently dissolved in 150 g of acetone and cooled to 40°C to obtain a prepolymer solution. 10 g of an aqueous solution containing 2.26 g of AAS and 0.69 g of diethanolamine was added to the acetone solution with the prepolymer dissolved therein while stirring vigorously for 30 min, and then the mixture was dispersed by adding 83 g of water. Following the separation of acetone by distillation, 7 g of an aqueous solution containing 0.64 g of an external emulsifier and 0.2 g of a bactericide was added to obtain a comparative aqueous polyurethane dispersion 1 having a solid content of 50.5%, a viscosity of 77 mPa.s, a pH value of 6.3, and a weight-average molecular weight of 65,800 g/mol.

The resulting aqueous polyurethane dispersion and Borchigel L75N at a concentration of 25 wt.% were stirred and mixed to obtain an adhesive. The amount of Borchigel L75N was adjusted (in a range of 0.5 to 2.0 wt.% relative to the total amount of the adhesive) so that the viscosity of the adhesive was about 5,000 mPa·s.

### Comparative Example 2 (CE2)

87.49 g of polyester I was dehydrated at 110°C and 100 mbar for 1 h, followed by cooling while stirring. 5.88 g of isocyanate I and 3.89 g of isocyanate II were added at 60°C, and stirred at 80 to 90°C until an isocyanate content of 1.18% was reached. The mixture was subsequently dissolved in 150 g of acetone and cooled to 40°C to obtain a prepolymer solution. 10 g of an aqueous solution containing 1.94 g of AAS and 0.72 g of diethanolamine was added to the acetone solution with the prepolymer dissolved therein while stirring vigorously for 30 min, and then the mixture was dispersed by adding 83 g of water. Following the separation of acetone by distillation, 7 g of an aqueous solution containing 0.86 g of an external emulsifier and 0.2 g of a bactericide was added to obtain a comparative aqueous polyurethane dispersion 2 having a solid content of 50.6%, a viscosity of 42 mPa·s, a pH value of 6.5, and a weight-average molecular weight of 72,300 g/mol.

The resulting aqueous polyurethane dispersion and Borchigel L75N at a concentration of 25 wt.% were stirred and mixed to obtain an adhesive. The amount of Borchigel L75N was adjusted (in a range of 0.5 to 2.0 wt.% relative to the total amount of the adhesive) so that the viscosity of the adhesive was about 5,000 mPa·s.

### Comparative Example 3 (CE3)

83.57 g of polyester I and 3.91 g of polyester II were dehydrated at 110°C and 100 mbar for 1 h, followed by cooling while stirring. 5.91 g of isocyanate I and 3.91 g of isocyanate II were added at 60°C, and stirred at 80 to 90°C until an isocyanate content of 1.15% was reached. The mixture was subsequently dissolved in 150 g of acetone and cooled to 40°C to obtain a prepolymer solution. 10 g of an aqueous solution containing 2.16 g of AAS and 0.55 g of diethanolamine was added to the acetone solution with the prepolymer dissolved therein while stirring vigorously for 30 min, and then the mixture was dispersed by adding 83 g of water. Following the separation of acetone by distillation, 7 g of an aqueous solution containing 0.86 g of an external emulsifier and 0.2 g of a bactericide was added to obtain a comparative aqueous polyurethane dispersion 3 having a solid content of 49.6%, a viscosity of 105 mPa·s, a pH value of 6.2, and a weight-average molecular weight of 76,500 g/mol.

The resulting aqueous polyurethane dispersion and Borchigel L75N at a concentration of 25 wt.% were stirred and mixed to obtain an adhesive. The amount of Borchigel L75N was adjusted (in a range of 0.5 to 2.0 wt.% relative to the total amount of the adhesive) so that the viscosity of the adhesive was about 5,000 mPa·s.

### Comparative Example 4 (CE4)

9.58 g of polyester I and 76.65 g of polyester II were dehydrated at 110°C and 100 mbar for 1 h, followed by cooling while stirring. 6.44 g of isocyanate I and 4.26 g of isocyanate II were added at 60°C, and stirred at 80 to 90°C until an isocyanate content of 1.3% was reached. The mixture was subsequently dissolved in 150 g of acetone and cooled to 40°C to obtain a prepolymer solution. 10 g of an aqueous solution containing 2.82 g of AAS and 0.60 g of diethanolamine was added to the acetone solution with the prepolymer dissolved therein while stirring vigorously for 30 min, and then the mixture was dispersed by adding 83 g of water. Following the separation of acetone by distillation, 7 g of an aqueous solution containing 0.86 g of an external emulsifier and 0.2 g of a bactericide was added to obtain a comparative aqueous polyurethane dispersion 4 having a solid content of 50.3%, a viscosity of 55 mPa·s, a pH value of 6.3, and a weight-average molecular weight of 43,300 g/mol.

The resulting aqueous polyurethane dispersion and Borchigel L75N at a concentration of 25 wt.% were stirred and mixed to obtain an adhesive. The amount of Borchigel L75N was adjusted (in a range of 0.5 to 2.0 wt.% relative to the total amount of the adhesive) so that the viscosity of the adhesive was about 5,000 mPa·s.

### Comparative Example 5 (CE5)

86.19 g of polyester II was dehydrated at 110°C and 100 mbar for 1 h, followed by cooling while stirring. 6.52 g of isocyanate I and 4.31 g of isocyanate II were added at 60°C, and stirred at 80 to 90°C until an isocyanate content of 1.3% was reached. The mixture was subsequently dissolved in 150 g of acetone and cooled to 40°C to obtain a prepolymer solution. 10 g of an aqueous solution containing 2.62 g of AAS and 0.61 g of diethanolamine was added to the acetone solution with the prepolymer dissolved therein while stirring vigorously for 30 min, and then the mixture was dispersed by adding 83 g of water. Following the separation of acetone by distillation, 7 g of an aqueous solution containing 0.86 g of an external emulsifier and 0.2 g of a bactericide was added to obtain a comparative aqueous polyurethane dispersion 5 having a solid content of 50.4%, a viscosity of 48 mPa·s, a pH value of 6.5, and a weight-average molecular weight of 40,000 g/mol.

The resulting aqueous polyurethane dispersion and Borchigel L75N at a concentration of 25 wt.% were stirred and mixed to obtain an adhesive. The amount of Borchigel L75N was adjusted (in a range of 0.5 to 2.0 wt.% relative to the total amount of the adhesive) so that the viscosity of the adhesive was about 5,000 mPa·s.

### Comparative Example 6 (CE6)

73.44 g of polyester I and 13.06 g of polyester II were dehydrated at 110°C and 100 mbar for 1 h, then 0.39 g of 1,4-butanediol was added, followed by cooling while stirring. 6.58 g of isocyanate I and 4.35 g of isocyanate II were added at 60°C, and stirred at 80 to 90°C until an isocyanate content of 1.3% was reached. The mixture was subsequently dissolved in 150 g of acetone and cooled to 40°C to obtain a prepolymer solution. 10 g of an aqueous solution containing 2.48 g of AAS was added to the acetone solution with the prepolymer dissolved therein while stirring vigorously for 30 min, and then the mixture was dispersed by adding 83 g of water. Following the separation of acetone by distillation, 7 g of an aqueous solution containing 0.73 g of an external emulsifier and 0.2 g of a bactericide was added to obtain a comparative aqueous polyurethane dispersion 6 having a solid content of 50.7%, a viscosity of 95 mPa·s, a pH value of 6.4, and a weight-average molecular weight of 304,200 g/mol.

The resulting aqueous polyurethane dispersion and Borchigel L75N at a concentration of 25 wt.% were stirred and mixed to obtain an adhesive. The amount of Borchigel L75N was adjusted (in a range of 0.5 to 2.0 wt.% relative to the total amount of the adhesive) so that the viscosity of the adhesive was about 5,000 mPa·s.

### Comparative Example 7 (CE7)

54.33 g of polyester I and 30.73 g of polyester II were dehydrated at 110°C and 100 mbar for 1 h, then 0.40 g of 1,4-butanediol was added, followed by cooling while stirring. 6.64 g of isocyanate I and 4.39 g of isocyanate II were added at 60°C, and stirred at 80 to 90°C until an isocyanate content of 1.3% was reached. The mixture was subsequently dissolved in 150 g of acetone and cooled to 40°C to obtain a prepolymer solution. 10 g of an aqueous solution containing 2.42 g of AAS and 1.25 g of diethanolamine was added to the acetone solution with the prepolymer dissolved therein while stirring vigorously for 30 min, and then the mixture was dispersed by adding 83 g of water. Following the separation of acetone by distillation, 7 g of an aqueous solution containing 0.85 g of an external emulsifier and 0.2 g of a bactericide was added to obtain a comparative aqueous polyurethane dispersion 7 having a solid content of 50.5%, a viscosity of 5,840 mPa·s, a pH value of 7.6, and a weight-average molecular weight of 33,800 g/mol.

The resulting aqueous polyurethane dispersion and Borchigel L75N at a concentration of 25 wt.% were stirred and mixed to obtain an adhesive. The amount of Borchigel L75N was adjusted (in a range of 0.5 to 2.0 wt.% relative to the total amount of the adhesive) so that the viscosity of the adhesive was about 5,000 mPa·s.

### Comparative Example 8 (CE8)

70.25 g of polyester I and 15.72 g of polyester IV were dehydrated at 110°C and 100 mbar for 1 h, then 0.40 g of 1,4-butanediol was added, followed by cooling while stirring. 6.60 g of isocyanate I and 4.36 g of isocyanate II were added at 60°C, and stirred at 80 to 90°C until an isocyanate content of 1.3% was reached. The mixture was subsequently dissolved in 150 g of acetone and cooled to 40°C to obtain a prepolymer solution. 10 g of an aqueous solution containing 2.36 g of AAS and 0.44 g of diethanolamine was added to the acetone solution with the prepolymer dissolved therein while stirring vigorously for 30 min, and then the mixture was dispersed by adding 83 g of water. Following the separation of acetone by distillation, 7 g of an aqueous solution containing 0.85 g of an external emulsifier and 0.2 g of a bactericide was added to obtain a comparative aqueous polyurethane dispersion 8 having a solid content of 50.1%, a viscosity of 36 mPa·s, a pH value of 6.4, and a weight-average molecular weight of 75,360 g/mol.

The resulting aqueous polyurethane dispersion and Borchigel L75N at a concentration of 25 wt.% were stirred and mixed to obtain an adhesive. The amount of Borchigel L75N was adjusted (in a range of 0.5 to 2.0 wt.% relative to the total amount of the adhesive) so that the viscosity of the adhesive was about 5,000 mPa·s.

### Performance tests

The resulting sample was subjected to initial adhesion force testing and heat resistance testing under different lamination time in accordance with testing methods mentioned above. The results are as follows:

Table 1 shows the results of the initial adhesion force testing and the heat resistance testing of Examples 1-8 (E1-E8) under different lamination time.

**Table 1**

| Components | E1 | E2 | E3 | E4 | E5 | E6 | E7 | E8 |
|---|---|---|---|---|---|---|---|---|
| Initial adhesive strength (N/mm) -T0 ≥0.4 N/mm | 1.1 | 1.4 | 1.9 | 0.9 | 1.3 | 0.9 | 0.9 | 0.4 |
| Initial adhesive strength (N/mm) -T3 ≥0.3 N/mm | 1.3 | 1.7 | 1.6 | 1.0 | 1.0 | 1.2 | 1.0 | 0.4 |
| Initial adhesive strength (N/mm) -T8 ≥0.2 N/mm | 1.5 | 1.8 | 1.8 | 0.3 | 0.8 | 0.9 | 0.3 | 0.2 |
| Heat resistance 80°C (min/100 mm) ≥2.0 min/100mm | 3.0 | 4.0 | 4.5 | 5.5 | 3.0 | 2.0 | 16.0 | 20.0 |

The sample obtained by bonding using the adhesive according to Examples 1-8 of the present invention exhibited good initial adhesion force, tackiness retention time and heat resistance at the activation temperature of 55°C. The adhesive prepared from the aqueous polyurethane dispersion of Examples 1-8 possessed good initial adhesion force, tackiness retention time and heat resistance.

Table 2 shows the results of the initial adhesion force testing and the heat resistance testing of Comparative Examples 1-8 (CE1-CE8) under different lamination time.

**Table 2**

| Components | CE1 | CE2 | CE3 | CE4 | CE5 | CE6 | CE7 | CE8 |
|---|---|---|---|---|---|---|---|---|
| Initial adhesive strength (N/mm) -T0 ≥0.4 N/mm | 0.0 | 1.0 | 0.3 | 0.2 | 0.2 | 0.0 | 0.6 | 1.4 |
| Initial adhesive strength (N/mm) -T3 ≥0.3 N/mm | 0.0 | 0.0 | 0.2 | 0.3 | 0.0 | 0.0 | 0.7 | 0.9 |
| Initial adhesive strength (N/mm) -T8 ≥0.2 N/mm | 0.0 | 0.0 | 0.0 | 0.0 | 0.0 | 0.0 | 0.2 | 0.0 |
| Heat resistance 80°C (min/100 mm) ≥2.0 min/100mm | 0.0 | 5.0 | 6.0 | 8.0 | 10.5 | 0.0 | 1.0 | 4.0 |

Comparative Example CE1 demonstrated that the adhesive prepared from the aqueous polyurethane dispersion comprising only aliphatic polyester polyols could not achieve qualified initial adhesion force and tackiness retention time at the same activation temperature.

Comparative Examples CE2-5 demonstrated that when the ratio of aromatic polyester polyols to crystalline aliphatic polyester polyols in the aqueous polyurethane dispersion exceeded a certain range, the resulting adhesive could not achieve qualified initial adhesion force and tackiness retention time at the same activation temperature.

Comparative Examples CE6-7 demonstrated that when the molecular weight of the polyurethane and/or polyurethane urea in the aqueous polyurethane dispersion was either too high or too low, the resulting adhesive could not achieve qualified initial adhesion force and tackiness retention time at the same activation temperature.

Comparative Example CE8 demonstrated that when the aqueous polyurethane dispersion comprised binary aromatic polyester polyols, it was impossible to produce a product with sufficient tackiness retention time, and the initial adhesive strength at T8 failed to meet the requirements.

A person of ordinary skill in the art will readily understand that the present invention is not limited to the foregoing details, and can be implemented in other specific forms without departing from the spirit or main characteristics of the present invention. Thus, the Examples should be regarded as illustrative rather than restrictive from any point of view, so that the scope of the present invention is illustrated by the claims rather than the foregoing description. Therefore, any change shall be regarded as belonging to the present invention, as long as it falls into the meaning and scope of equivalents of the claims.

## Claims

1. An aqueous polyurethane dispersion comprising polyurethane and/or polyurethane urea, wherein the polyurethane and/or polyurethane urea is obtained by reaction of a system comprising the following components:
a) at least one aromatic polyester polyol component, which is a reaction product of at least one aromatic polyacid and/or aromatic anhydride and at least two polyols, and the amount of component a) is 5 to 75 wt.% of the solid content of the aqueous polyurethane dispersion;
b) at least one crystalline aliphatic polyol component, in an amount of 10 to 83 wt.% of the solid content of the aqueous polyurethane dispersion;
c) at least one polyisocyanate component;
d) at least one hydrophilic compound component comprising NCO reactive functional groups, wherein hydrophilic groups of the hydrophilic compound comprise one or more of ionic groups, potentially ionic groups and nonionic groups;
e) an optional small molecule alcohol component different from components a) and b), having a molecular weight of 32 to 400 g/mol; and
f) an additional isocyanate-reactive compound component, comprising one or more of water, amine chain extenders and amine end-capping agents,
wherein the weight-average molecular weight of the polyurethane and/or polyurethane urea is in a range of 35,000 to 250,000 g/mol.

2. The aqueous polyurethane dispersion according to claim 1, wherein the aqueous polyurethane dispersion has a solid content of 15 to 70 wt.%, preferably 30 to 65 wt.%, more preferably 40 to 60 wt.%, based on the total weight of the polyurethane dispersion.

3. The aqueous polyurethane dispersion according to claim 1 or 2, wherein the weight-average molecular weight of the aqueous polyurethane dispersion is in a range of 35,000 to 210,000 g/mol.

4. The aqueous polyurethane dispersion according to any one of claims 1 to 3, wherein the aromatic polyacid and/or aromatic anhydride for preparing component a) is independently selected from phthalic anhydride, phthalic acid, isophthalic acid and terephthalic acid;
preferably the polyols for preparing component a) are selected from ethylene glycol, diethylene glycol, triethylene glycol, 1,2-propylene glycol, 1,3-propylene glycol, dipropylene glycol, tripropylene glycol, butanediol, neopentyl glycol, hexanediol, heptanediol, nondiol and decanediol, preferably a mixture of neopentyl glycol and hexanediol, wherein the molar ratio of neopentyl glycol to hexanediol is preferably 9/1 to 1/9, more preferably 6/1 to 1/6, and most preferably 3/1 to 1/3; and
preferably the amount of component a) is 7 to 70 wt.%, preferably 15 to 60 wt.% of the solid content of the aqueous polyurethane dispersion.

5. The aqueous polyurethane dispersion according to any one of claims 1 to 4, wherein component a) has a number-average molecular weight of 100 to 20,000 g/mol, preferably 500 to 5,000 g/mol, more preferably 500 to 4,000 g/mol, and/or a functionality of 1.5 to 4.0, preferably 1.8 to 2.5, more preferably 2.

6. The aqueous polyurethane dispersion according to any one of claims 1 to 5, wherein component b) is selected from polyester polyols, polycaprolactone polyols and polycarbonate polyols or at least two thereof,
preferably the melting enthalpy of the component b) is greater than 10 J/g, preferably greater than 20 J/g, more preferably 30 to 130 J/g, and most preferably 40 to 100 J/g, and
preferably the amount of the component b) is 10 to 83 wt.%, preferably 15 to 81 wt.%, more preferably 20 to 80 wt.% of the solid content of the aqueous polyurethane dispersion.

7. The aqueous polyurethane dispersion according to any one of claims 1 to 6, wherein component b) has a number-average molecular weight of 100 to 20,000 g/mol, preferably 500 to 5,000 g/mol, more preferably 500 to 4,000 g/mol, and/or a functionality of 1.5 to 4.0, preferably 1.8 to 2.5, more preferably 2.

8. The aqueous polyurethane dispersion according to any one of claims 1 to 7, wherein the weight ratio of the component a) to the component b) is 6/1 to 1/15, preferably 5/1 to 1/11, more preferably 2/1 to 1/9, and most preferably 1/1 to 1/6.

9. The aqueous polyurethane dispersion according to any one of claims 1 to 8, wherein the component c) is selected from diisocyanates represented by the formula Y(NCO)₂, wherein Y represents a divalent aliphatic hydrocarbon group having 4 to 12 carbon atoms, a divalent alicyclic hydrocarbon group having 6 to 15 carbon atoms, a divalent aromatic hydrocarbon group having 6 to 15 carbon atoms, or a divalent araliphatic hydrocarbon group having 7 to 15 carbon atoms,
preferably, Y represents a divalent aliphatic hydrocarbon group having 4 to 12 carbon atoms or a divalent alicyclic hydrocarbon group having 6 to 15 carbon atoms,
more preferably, the polyisocyanate is selected from tetramethylene diisocyanate, pentamethylene diisocyanate, hexamethylene diisocyanate, dodecamethylene diisocyanate, 1,4-cyclohexane diisocyanate, isophorone diisocyanate, 4,4'-dicyclohexylmethane diisocyanate and 4,4'-dicyclohexylpropane diisocyanate, and
preferably the amount of the component c) is 5 to 80 wt.%, more preferably 5 to 70 wt.%, most preferably 5 to 50 wt.% of the solid content of the aqueous polyurethane dispersion.

10. The aqueous polyurethane dispersion according to any one of claims 1 to 9, wherein the NCO reactive functional groups of the hydrophilic compound component d) are hydroxyl and/or amino groups; preferably, the hydrophilic compound component d) is an ionic or potentially ionic compound, preferably an ionic or potentially ionic compound having a carboxyl or carboxylate and/or sulfonate group and/or an amino group, more preferably selected from 6-aminohexanoate, lysinate, N-(2-aminoethyl)-β-alaninate, 2-[(2-aminoethyl)amino]ethanesulfonate and 3-(cyclohexylamino)-1-propanesulfonate, even more preferably selected from 2-[(2-aminoethyl)amino]ethanesulfonate and 3-(cyclohexylamino)-1-propanesulfonate, and most preferably selected from sodium 2-[(2-aminoethyl)amino]ethanesulfonate and sodium 3-(cyclohexylamino)-1-propanesulfonate; and
preferably the amount of the component d) is 0.1 to 5 wt.%, preferably 0.3 to 3 wt.%, more preferably 0.5 to 1.5 wt.% of the solid content of the aqueous polyurethane dispersion.

11. The aqueous polyurethane dispersion according to any one of claims 1 to 10, wherein component e) is selected from ethanol, propanol, 2-propanol, n-butyl alcohol, sec-butyl alcohol, n-hexanol and isomers thereof, 2-ethylhexanol, ethylene glycol monomethyl ether, diethylene glycol monomethyl ether, ethylene glycol monobutyl ether, diethylene glycol monobutyl ether, propylene glycol monomethyl ether, dipropylene glycol monomethyl ether, tripropylene glycol monomethyl ether, dipropylene glycol monopropyl ether, propylene glycol monobutyl ether, dipropylene glycol monobutyl ether, tripropylene glycol monobutyl ether, 1-octanol, 1-dodecanol, 1-hexadecanol, lauryl alcohol and stearyl alcohol, ethylene glycol, diethylene glycol, triethylene glycol, tetraethylene glycol, 1,2-propylene glycol, dipropylene glycol, tripropylene glycol, tetrapropylene glycol, 1,3-propanediol, 1,4-butanediol, 1,3-butanediol, 2,3-butanediol, 1,5-pentanediol, 1,6-hexanediol, 2,2-dimethyl-1,3-propanediol, 1,4-dihydroxymethylcyclohexane, 1,8-octanediol, 1,10-decanediol, 1,12-dodecanediol, neopentyl glycol, 1,4-cyclohexanediol, 1,4-cyclohexanediethanol, 1,4-, 1,3-, 1,2-dihydroxybenzene, 2,2-bis-(4-hydroxyphenyl)-propane (bisphenol A), tricyclodecane dimethanol, trimethylolpropane, glycerol, pentaerythritol, and dipentatriol or a mixture of at least two thereof; and
preferably the amount of the component e) is 0 to 3 wt.%, preferably 0 to 2 wt.%, more preferably 0 to 1 wt.% of the solid content of the aqueous polyurethane dispersion.

12. The aqueous polyurethane dispersion according to any one of claims 1 to 11, wherein component f) is selected from water, hydrazine, hydrazide, aliphatic or alicyclic monoamines, diamines or triamines or hydroxy functional monoamines or diamines; and preferred amines are ethylenediamine, isophorone diamine, diethylenetriamine, ethanolamine, N-methylethanolamine, diethanolamine, diisopropanolamine, 1,3-diamino-2-propanol, N-(2-hydroxyethyl)-ethylenediamine, N,N-bis(2-hydroxyethyl)-ethylene diamine and 2-propanolamine or a mixture of at least two thereof.

13. A coating material, an adhesive, a sealant or an ink, prepared using the aqueous polyurethane dispersion according to any one of claims 1 to 12.

14. A bonding method, comprising the steps of:
i. applying the adhesive according to claim 13 to at least one surface of a substrate;
ii. heating and drying the surface of the substrate applied with the adhesive at a temperature in a range of 30°C to 59°C; and
iii. bringing another substrate into contact with the surface of the substrate treated in step ii to obtain a bonded product.

15. An article, comprising a substrate coated, bonded, sealed or printed with the aqueous polyurethane dispersion according to any one of claims 1 to 13.
